# EUROPEAN PATENT APPLICATION

(11) **EP 4 657 016 A2**
(43) Date of publication of application: **03.12.2025**
(21) Application number: 25198034.8
(22) Date of filing: 26.08.2025
(51) Int. Cl.: G01B 11/25

(54) **THREE-DIMENSIONAL SCANNER AND SCANNING METHOD THEREOF**

(30) Priority: 27.08.2024 CN 202411188474
(71) Applicant: Shining 3D Tech Co., Ltd., Hangzhou, Zhejiang 311258 (CN)
(72) Inventor: LIU, Zengyi, Hangzhou, 311258 (CN); JIANG, Tengfei, Hangzhou, 311258 (CN); GUO, Zhihao, Hangzhou, 311258 (CN); ZHANG, Jian, Hangzhou, 311258 (CN); HUANG, Leijie, Hangzhou, 311258 (CN)
(74) Representative: Dai, Simin

(57) **Abstract**

The present disclosure discloses a three-dimensional scanner and a scanning method thereof, and relates to the technical field of three-dimensional scanners. The three-dimensional scanner includes a bracket, at least two sets of projectors and at least two sets of cameras mounted on the bracket and a controller; different sets of projectors correspond to different scanning ranges, so that each set of projectors projects structured light onto an object to be scanned, and an image reflected by the object to be scanned can be collected by one set of cameras with a corresponding focal length; the controller is configured to control one set of projectors to turn on at a same time, and when any one set of projectors is turned on, control one set of cameras with a corresponding focal length to collect an image reflected by the object to be scanned.

## Description

### TECHNICAL FIELD

The present disclosure relates to the technical field of three-dimensional scanners, and in particular, to a three-dimensional scanner and a scanning method thereof.

### BACKGROUND

The 3D (three-dimensional) scanner is a scientific instrument for detecting and analyzing the shape (geometric structure) and appearance data (such as color, surface albedo, etc.) of an object or environment in the real world, and collected data is often used for calculation of three-dimensional reconstruction to create a digital model of an actual object in the virtual world.

The existing three-dimensional scanners on the market could only either scan a single range, for example, scan a large single range by using a depth camera such as kinect, realsense, mantis, etc., or scan a medium or small range in a single pattern, for example, a line-structured light scanner, an area-structured light scanner, etc., but none of which can meet the requirements for both large-range scanning and local high-detail scanning of an object to be scanned.

### SUMMARY

In order to solve the above technical problems, embodiments of the present disclosure provide a three-dimensional scanner and a scanning method thereof, so as to meet the requirements of large-range scanning and local high-detail scanning of an object to be scanned.

To achieve the foregoing objective, the embodiments of the present disclosure provide the following technical solutions.

A three-dimensional scanner, including:
a bracket; and
at least two sets of projectors and at least two sets of cameras mounted on the bracket, where each set of projectors includes at least one projector, and each set of cameras includes at least two cameras;
where the each set of projectors corresponds to a respective scanning range, different sets of projectors correspond to different scanning ranges; the each set of projectors projects structured light onto an object to be scanned, and an image reflected by the object to be scanned is collected by one set of cameras with a corresponding focal length;
where the three-dimensional scanner further includes a controller, configured to, when the object to be scanned is to be scanned, control one set of projectors to turn on at a same moment; and when any one set of projectors is turned on, control one set of cameras with a corresponding focal length to collect an image reflected by the object to be scanned.

Optionally, different sets of projectors are configured to project structured light in different patterns, and the each set of projectors is configured to project structured light in a corresponding pattern onto an object to be scanned within a corresponding scanning range.

Optionally, the controller is further configured to: after scanning over a corresponding scanning range is completed, control another set of projectors to turn on to perform scanning over another scanning range.

Optionally, different sets of cameras have different focal lengths.

Optionally, the at least two sets of projectors and the at least two sets of cameras are in one-to-one correspondence.

Optionally, each set of cameras corresponds to two or more sets of projectors.

Optionally, the at least two sets of projectors include three sets of projectors, including a first set of projectors, a second set of projectors, and a third set of projectors, where scanning ranges corresponding to the first set of projectors, the second set of projectors, and the third set of projectors are progressively closer to the bracket in sequence;
the at least two sets of cameras include two sets of cameras, including a first set of cameras and a second set of cameras, where the first set of cameras and the second set of cameras each includes two cameras, and a focal length of the first set of cameras is less than a focal length of the second set of cameras; on either side of the three sets of projectors, a camera in the first set of cameras is located on a side of a camera in the second set of cameras facing away from the three sets of projectors;
when controlling the first set of projectors to turn on to scan the object to be scanned, the controller is configured to control the first set of cameras to collect an image; and
when controlling the second set of projectors or the third set of projects to turn on to scan the object to be scanned, the controller is configured to control the second set of cameras to collect an image.

Optionally, the first set of projectors projects structured light in a speckle pattern, the second set of projectors projects structured light in a cross-line laser pattern, and the third set of projectors projects structured light in a parallel-line laser pattern.

A scanning method of a three-dimensional scanner, including:
projecting structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range, where different scanning ranges correspond to structured light in different patterns;
when scanning the object to be scanned over any one scanning range, projecting structured light in a pattern corresponding to the scanning range onto the object to be scanned within the scanning range and collecting an image reflected by the object to be scanned.

Optionally, projecting structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range includes:
projecting structured light in a first pattern onto the object to be scanned and performing scanning over a first scanning range, switching to project structured light in a second pattern onto the object to be scanned and performing scanning over a second scanning range, and switching to project structured light in a third pattern onto the object to be scanned and performing scanning over a third scanning range, where the first scanning range, the second scanning range and the third scanning range are progressively closer to the three-dimensional scanner in sequence.

Optionally, the scanning method of the three-dimensional scanner further includes:
processing images collected in different scanning ranges to obtain three-dimensional point cloud data in different scanning ranges; and
matching and splicing the three-dimensional point cloud data of different scanning ranges into a global coordinate system.

Optionally, an image collected in each of the scanning ranges includes an image of a mark point pre-adhered at a specific position on the object to be scanned, and the three-dimensional point cloud data of each of the scanning ranges includes three-dimensional point cloud data of the mark point on the object to be scanned;
where matching and splicing the three-dimensional point cloud data of different scanning ranges into a global coordinate system includes:
matching and splicing the three-dimensional point cloud data of the different scanning ranges into the global coordinate system according to the three-dimensional point cloud data of the mark point on the object to be scanned in the three-dimensional point cloud data of each of the scanning ranges.

Compared with prior arts, the above technical solution has following advantages:
The three-dimensional scanner provided by the embodiments of the present disclosure includes a bracket, and at least two sets of projectors and at least two sets of cameras mounted on the bracket, where each set of projectors includes at least one projector, and each set of cameras includes at least two cameras; the each set of projectors corresponds to a respective scanning range, different sets of projectors correspond to different scanning ranges, and different sets of projectors project structured light in different patterns, that is, different scanning ranges correspond to structured light in different patterns, so that one set of projectors project structured light in a corresponding pattern onto an object to be scanned within a corresponding scanning range, and an image reflected by the object to be scanned can be collected by one set of cameras of a corresponding focal length; the three-dimensional scanner further includes a controller, configured to, when the object to be scanned is to be scanned, control one set of projectors to turn on at a same moment to project structured light of a pattern onto the object to be scanned to perform scanning over a scanning range, and after scanning of the object to be scanned over the scanning range is completed, control another set of projectors to turn on to project structured light in another pattern onto the object to be scanned to perform scanning over another scanning range, and any one set of projectors turns on and projects structured light in a corresponding pattern onto the object to be scanned in a corresponding scanning range, control one set of cameras with a corresponding focal length to collect an image reflected by the object to be scanned.

In such way, based on the at least two sets of projectors for projecting structured light in different patterns and at least two sets of cameras in the three-dimensional scanner, and coordinated control of the projector sets and the camera sets by the controller provided by the embodiments of the present disclosure, combining structured light in at least two patterns and at least two scanning ranges can be achieved, so as to complete coordinated scanning meeting the requirements of different details and different scanning ranges. Specifically, projector sets that project structured light in a proper pattern and camera sets that have corresponding focal lengths can be selected to scan the object to be scanned in a scenario of large range without requiring high details, at the same time, projector sets that project structured light in a proper pattern and camera sets that have corresponding focal lengths can be selected to scan the object to be scanned in a close-up range with high local details, so that the requirements for scanning the object to be scanned in both large range and local range with high details are fulfilled, and different scanning ranges can be switched by the controller in an automatic way, which saves time and efforts, reduces cost, and optimizes scanning efficiency.

### BRIEF DESCRIPTION OF DRAWINGS

In order to more clearly illustrate the technical solutions in the embodiments of the present disclosure or in the prior arts, the drawings used in the description of the embodiments or the prior arts will be briefly described below; it is obvious that the drawings in the following description are only some embodiments of the present disclosure, and those skilled in the art can obtain other drawings according to these drawings without making creative efforts.
FIG. 1 is a schematic structural diagram of a three-dimensional scanner according to an embodiment of the present disclosure.
FIG. 2 is a schematic flowchart of a scanning method of a three-dimensional scanner according to an embodiment of the present disclosure.
FIG. 3 is a schematic flowchart of another scanning method of a three-dimensional scanner according to an embodiment of the present disclosure.

### DETAILED DESCRIPTION

The technical solutions in the embodiments of the present disclosure will be clearly and completely described below with reference to the accompanying drawings in the embodiments of the present disclosure, and it is apparent that the described embodiments are only a part of the embodiments of the present disclosure rather than all of the embodiments. All other embodiments obtained by a person of ordinary skill in the art based on the embodiments of the present disclosure without making creative efforts shall fall within the protection scope of the present disclosure.

In the following description, numerous specific details are set forth in order to provide a thorough understanding of the present disclosure, but the present disclosure may also be implemented in other ways than those described herein, and those skilled in the art may make similar extensions without departing from the spirit of the present disclosure, so the present disclosure is not limited by the specific embodiments disclosed below.

As described in the background, the existing three-dimensional scanners on the market could only either scan a single range, for example, scan a large single range by using a depth camera such as kinect, realsense, mantis, etc., or scan a medium or small range in a single pattern, for example, a line-structured light scanner, an area-structured light scanner, etc., but none of which can meet the requirements for both large-range scanning and local high-detail scanning of an object to be scanned.

It has been found by the inventor that, to meet the requirements of both multiple-range scanning and local high-detail scanning, although it is possible to cooperate with multiple three-dimensional scanners of different scanning ranges, which is barely enough to complete the task, the disadvantages are also obvious, because each three-dimensional scanner has its own bracket, projector set, camera set and control circuit, it is difficult to realize cooperation of the multiple three-dimensional scanners, and moreover, this brings up high cost, low efficiency, high consumption of time and resources, and low automation.

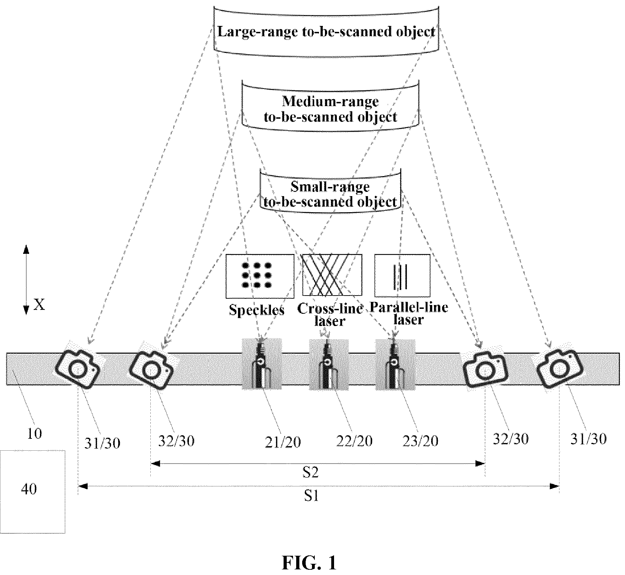

On this basis, an embodiment of the present disclosure provides a three-dimensional scanner. FIG. 1 shows a schematic structural diagram of a three-dimensional scanner provided by the embodiment of the present disclosure. As shown in FIG. 1, the three-dimensional scanner includes a bracket 10, and at least two sets of projectors 20 and at least two sets of cameras 30 mounted on the bracket 10; each set of projectors 20 includes at least one projector, that is, each set of projectors 20 may include one projector, or may include two or more same projectors; each set of cameras 30 includes at least two cameras; when the each set of cameras 30 includes two cameras, the two cameras are respectively located on two sides of the at least two sets of projectors 20, that is, a camera in the each set of cameras 30 is located on one side of the at least two sets of projectors 20, and another camera is located on another side of the at least two sets of projectors 20, so that the two cameras in the each set of cameras 30 constitute a binocular camera; similarly, when each set of cameras 30 includes three cameras, the three cameras in the each set of cameras 30 constitute a trinocular camera, and so on.

For example, as shown in FIG. 1, the at least two sets of projectors 20 include three sets of projectors, the three sets of projectors include a first set of projectors 21, a second set of projectors 22, and a third set of projectors 23, and each set of projectors includes one projector; the at least two sets of cameras 30 include two sets of cameras, the two sets of cameras include a first set of cameras 31 and a second set of cameras 32, where the first set of cameras 31 and the second set of cameras 32 each include two cameras, two cameras in the first set of cameras 31 are respectively located on two sides of the three sets of projectors, and two cameras in the second set of cameras 32 are also respectively located on two sides of the three sets of projectors.

In an embodiment of the present disclosure, each set of projectors 20 corresponds to a respective scanning range, different sets of projectors 20 correspond to different scanning ranges, and different sets of projectors 20 project structured light in different patterns, so that the structured light projected by the each set of projectors 20 has a pattern applicable to a corresponding scanning range.

For example, as shown in FIG. 1, the structured light projected by the first set of projectors 21 is in a speckle pattern, speckles may be projected by an LED (light emitting diode) light source, and scanning of an object to be scanned is implemented by projecting a speckle pattern onto a surface of the object to be scanned and collecting a reflected speckle image, where the speckle pattern includes a series of randomly distributed light points. Therefore, the speckles projected by the first set of projectors 21 is suitable for scanning over a large range, which has a fast scanning speed, and can obtain an overall morphology of the object to be scanned through scanning.

The structured light projected by the second set of projectors 22 is in a cross-line laser pattern, which is simplified as crossed lasers in FIG. 1, the cross-line laser refers to light spots including multiple laser lines generated by specially designed projectors, these light spots intersect with each other in space to form complex light field distribution, the cross-line laser has high-precision and high-speed scanning capabilities, and can realize detailed scanning of the surface of complex objects. Therefore, the cross-line laser projected by the second set of projectors 22 is suitable for mid-range scanning, and can further scan an area that requires details but does not require fine details on the to-be-scanned object.

The structured light projected by the third set of projectors 23 is a parallel-line laser pattern, which is simplified as parallel lasers in FIG. 1, the parallel laser refers to laser beams that are almost completely parallel along a propagation direction, and the laser beams hardly diverges or focuses in the propagation process, maintains a stable geometry, has a very small divergence, and has high brightness, and has uniform and concentrated light intensity distribution. Therefore, the parallel-line laser projected by the first set of projectors 21 is suitable for small-range scanning, and can perform high-precision scanning on a high-detail area of interest of the to-be-scanned object.

Referring to FIG. 1, it could be understood that when the object to be scanned is to be scanned, the three-dimensional scanner is disposed to face the object to be scanned, and a direction in which the three-dimensional scanner and the object to be scanned face each other is set as a first direction X. To scan an overall contour of the object to be scanned, a relatively large distance is required between the three-dimensional scanner and the object to be scanned, that is, the three-dimensional scanner has a relatively far scanning range along the first direction X. To perform local high-detail scanning on the object to be scanned, a relatively close distance is required between the three-dimensional scanner and the object to be scanned, that is, the three-dimensional scanner has a scanning range closer to the first direction X. In an embodiment of the present disclosure, the scanning range refers to a scanning range along the first direction X, and different sets of projectors 20 correspond to different scanning ranges, specifically, different sets of projectors 20 correspond to different scanning ranges along the first direction X.

It may be further understood that different sets of projectors 20 correspond to different scanning ranges along the first direction X, that is, the scanning ranges along the first direction X corresponding to different sets of projectors 20 at least have non-overlapping parts. Optionally, the scanning ranges along the first direction X corresponding to different sets of projectors 20 do not overlap at all; alternatively, the scanning ranges along the first direction X corresponding to different sets of projectors 20 have some parts that are non-overlapping.

Therefore, at least two sets of projectors 20 that project structured light in different patterns are mounted on the bracket 10, and may correspond to at least two scanning ranges.

In an embodiment of the present disclosure, one set of projectors 20 project structured light in a corresponding pattern onto a to-be-scanned object within a corresponding scanning range, and an image reflected by the to-be-scanned object is collected by one set of cameras 30 with a corresponding focal length.

It should be noted that a scanning range corresponding to each set of projectors 20 is actually determined by a beam range of the structured light projected by the each set of projectors 20 and a collection range of a set of cameras 30 corresponding to the set of projectors 20, and in the present disclosure, each set of projectors 20 corresponds to a respective scanning range, this is because the structured light in a pattern projected by a set of projectors 20 is applicable to a corresponding scanning range, and the structured light in respective patterns projected by respective sets of projectors 20 correspond to different scanning ranges, so as to distinguish and mark different scanning ranges, which does not mean that the scanning range is uniquely determined by the projectors.

It can be understood that the focal length of the camera is a key parameter, which determines a viewing angle range that can be captured by the camera and imaging characteristics. The shorter the focal length of the camera is, the wider the field of view of the camera is, which can accommodate more scenes, but the corresponding depth of field will also become shallower, and the background blurring effect is enhanced. The longer the focal length of the camera is, the narrower the field of view of the camera is, which can be more focused on the shooting object, and the depth of field will also become deeper, and the background blurring effect is weakened.

For large-range scanning, a camera with a shorter focal length may be selected to acquire an image of the object to be scanned within a large range, so as to obtain an overall morphology of the object to be scanned, and the scanning speed is fast, but the image resolution is low and the details are poor. For medium-range or small-range scanning, a camera with a longer focal length may be selected to acquire an image of the object to be scanned within a medium or small range, so as to realize high-precision scanning of a local area having a detail requirement on the object to be scanned, with higher image resolution and better details.

As known from the above, at least two sets of projectors 20 for projecting structured light in different patterns are mounted on the bracket 10, which may correspond to at least two different scanning ranges, and at least two sets of cameras 30 are mounted on the bracket 10, images of the object to be scanned within the at least two different scanning ranges may be collected, so that one set of projectors 20 projects structured light in a corresponding pattern onto the object to be scanned within the corresponding scanning range, and the images reflected by the object to be scanned can be collected by one set of cameras 30 with a corresponding focal length.

For example, as shown in FIG. 1, a focal length of the first set of cameras 31 is less than a focal length of the second set of cameras 32, and on either side of the three sets of projectors, i.e., the first set of projectors 21, the second set of projectors 22, and the third set of projectors 23, each camera in the first set of cameras 31 is located on a side of a camera in the second set of cameras 32 facing away from the three sets of projectors, that is, a baseline distance S1 between two cameras in the first set of cameras 31 is greater than a baseline distance S2 between two cameras in the second set of cameras 32.

In this way, the first set of cameras 31 may collect images reflected by the to-be-scanned object after the first set of projectors 21 project the speckles onto the to-be-scanned object within a large range, and the second set of cameras 32 may collect images reflected by the to-be-scanned object after the second set of projectors 22 project the cross-line laser onto the to-be-scanned object within a medium range, and collect images reflected by the to-be-scanned object after the third set of projectors 23 project the parallel-line laser onto the to-be-scanned object within a small range.

In an embodiment of the present disclosure, optionally, different sets of cameras 30 have different focal lengths, so that each set of cameras 30 can collect an image of a to-be-scanned object in a corresponding scanning range; optionally, focal lengths of some sets of cameras 30 are different, and focal lengths of some sets of cameras 30 are the same; optionally, focal lengths of all sets of cameras 30 are the same, provided that any one set of projectors 20 projects structured light in a corresponding pattern onto a to-be-scanned object in a corresponding scanning range, and an image reflected by the to-be-scanned object can be collected by a set of cameras 30 with a corresponding focal length.

In an embodiment of the present disclosure, optionally, one set of projectors 20 may correspond to one set of cameras 30, so that the set of projectors 20 project structured light in a corresponding pattern onto a to-be-scanned object within a corresponding scanning range, and an image reflected by the to-be-scanned object is collected by the corresponding set of cameras 30.

Alternatively, two or more sets of projectors 20 may correspond to one set of cameras 30, because at least some parts of the scanning ranges corresponding to different sets of projectors 20 do not overlap along the first direction X, so that only one set of projectors 20 is turned on at a time to scan the object to be scanned, and different sets of projectors 20 are not turned on at the same time, so that only one set of cameras 30 may collect, at a time, an image obtained after structured light in a corresponding pattern is projected by one set of projectors 20 onto the object to be scanned within the corresponding scanning range and reflected by the object to be scanned. In addition, by at least two sets of projectors 20 correspond to one set of cameras 30, the number of camera sets can be reduced, and cost is reduced. However, not any two sets of projectors 20 can correspond to one set of cameras 30, for example, two sets of projectors 20 corresponding to a medium scanning range and a small scanning range can correspond to one set of cameras 30, because the medium and small scanning ranges require a longer focal length of the cameras, and the large scanning range requires a shorter focal length of the cameras.

In an embodiment of the present disclosure, as shown in FIG. 1, the three-dimensional scanner further includes a controller 40, configured to, when the object to be scanned is to be scanned, control one set of projectors 20 to turn on at a same moment, and after scanning over a corresponding scanning range is completed, control another set of projectors to turn on to perform scanning over another scanning range; and when any one set of projectors 20 is turned on and projects structured light in a corresponding pattern onto the object to be scanned in a corresponding scanning range, control one set of cameras 30 with a corresponding focal length to collect an image reflected by the object to be scanned.

As known from the above, at least some parts of the scanning ranges corresponding to different sets of projectors 20 do not overlap along the first direction X, so that the controller 40 controls one set of projectors 20 to turn on at the same time, and the set of projectors 20 project the structured light in the corresponding pattern onto the object to be scanned within the corresponding scanning range; the controller 40 simultaneously controls one set of cameras 30 corresponding to the focal length to collect the image of the set of projectors projecting the structured light in the corresponding pattern onto the object to be scanned within the corresponding scanning range after being reflected by the object to be scanned; after the scanning over the scanning range of the object to be scanned is completed, the controller 40 controls the other set of projectors 20 to turn on, the other set of projectors 20 project the structured light in the corresponding pattern onto the object to be scanned within the corresponding other scanning range, and the controller 40 simultaneously controls the one set of cameras 30 corresponding to the focal length to collect the image of the other set of projectors projecting the structured light in the corresponding pattern onto the object to be scanned within the corresponding scanning range after being reflected by the object to be scanned; and so on, scanning of different scanning ranges of the object to be scanned is completed.

In such way, based on the at least two sets of projectors for projecting structured light in different patterns and at least two sets of cameras in the three-dimensional scanner, and coordinated control of the projector sets and the camera sets by the controller provided by the embodiments of the present disclosure, combining structured light in at least two patterns and at least two scanning ranges can be achieved, so as to complete coordinated scanning meeting the requirements of different details and different scanning ranges. Specifically, projector sets that project structured light in a proper pattern and camera sets that have corresponding focal lengths can be selected to scan the object to be scanned in a scenario of large range without requiring high details, at the same time, projector sets that project structured light in a proper pattern and camera sets that have corresponding focal lengths can be selected to scan the object to be scanned in a close-up range with high local details, so that the requirements for scanning the object to be scanned in both large range and local range with high details are fulfilled, and different scanning ranges can be switched by the controller in an automatic way, which saves time and resources, reduces cost, and optimizes scanning efficiency.

Optionally, in some embodiments of the present disclosure, as shown in FIG. 1, the at least two sets of projectors 20 include three sets of projectors, the three sets of projectors include a first set of projectors 21, a second set of projectors 22, and a third set of projectors 23, and scanning ranges corresponding to the first set of projectors 21, the second set of projectors 22, and the third set of projectors 23 are progressively closer to the bracket 10 in sequence. In such way, the first set of projectors 21 corresponds to a largest scanning range, and then is the scanning range corresponding to the second set of projectors 22, and the third set of projectors 23 corresponds to a smallest scanning range.

Optionally, the first set of projectors 21 projects the structured light in a speckle pattern, and a distance between the scanning range corresponding to the first set of projectors 21 and the bracket 10 may be 1m (1 meter) to 3m (3 meters), with endpoint values included, that is, the maximum distance d1 between the scanning range corresponding to the first set of projectors 21 and the bracket 10 may be 3m, and the minimum distance c1 may be 1m.

The second set of projectors 22 project structured light in a cross-line laser pattern, and the distance between the scanning range corresponding to the second set of projectors 22 and the bracket 10 may range from 0.3m to 1m, with endpoint values included, that is, the maximum distance d2 between the scanning range corresponding to the second set of projectors 22 and the bracket 10 may be 1m, and the minimum distance c2 may be 0.3m.

The third set of projectors 23 project structured light in a parallel-line laser pattern, and the distance between the scanning range corresponding to the third set of projectors 23 and the bracket 10 may range from 0.1m to 0.3m, including endpoint values, that is, the maximum distance d3 between the scanning range corresponding to the third set of projectors 23 and the bracket 10 may be 0.3m, and the minimum distance c3 may be 0.1m.

In an embodiment, as shown in FIG. 1, the at least two sets of cameras 30 include two sets of cameras, the two sets of cameras include a first set of cameras 31 and a second set of cameras 32, the first set of cameras 31 and the second set of cameras 32 each includes two cameras, and a focal length of the first set of cameras 31 is less than a focal length of the second set of cameras 32; on either side of the three sets of projectors, a camera in the first set of cameras 31 is located on a side of a camera in the second set of cameras 32 facing away from the three sets of projectors; that is, a baseline distance S1 between two cameras in the first set of cameras 31 is greater than a baseline distance S2 between two cameras in the second set of cameras 32.

In this way, the first set of cameras 31 may collect images reflected by the to-be-scanned object after the first set of projectors 21 project the speckles onto the to-be-scanned object within a large range, and the second set of cameras 32 may collect images reflected by the to-be-scanned object after the second set of projectors 22 project the cross-line laser onto the to-be-scanned object within a medium range, and collect images reflected by the to-be-scanned object after the third set of projectors 23 project the parallel-line laser onto the to-be-scanned object within a small range.

In an embodiment, the controller 40 controls the first set of cameras 31 with a shorter focal length to collect images when the first set of projectors 21 are turned on to perform large-scale scanning on the to-be-scanned object; and the controller controls the second set of cameras 32 with a longer focal length to collect images when the second set of projectors 22 and the third set of projectors 23 are respectively turned on to perform small-range scanning on the to-be-scanned object.

Specifically, when the object to be scanned is to be scanned, firstly, the controller 40 controls the first set of projectors 21 to turn on to project speckles to the to-be-scanned object, and large-scale scanning is performed on the to-be-scanned object; meanwhile, the controller 40 controls the first set of cameras 31 to collect images reflected by the to-be-scanned object when the speckles are projected to the to-be-scanned object within a large range, so that an overall frame contour point cloud of the to-be-scanned object can be acquired, but with low scanning resolution and poor details for a large scanning range.

Then, the controller 40 controls the second set of projectors 22 to turn on to project cross-line lasers onto the to-be-scanned object, and mid-range scanning is performed on the to-be-scanned object; meanwhile, the controller 40 controls the second set of cameras 32 to collect images of the cross-line lasers projected onto the to-be-scanned object within the mid-range and reflected by the to-be-scanned object; in this way, the corners that are not scanned in the large-range scanning mode can be supplemented, the range with detail requirements can be further scanned, point clouds with better details can be obtained, and the scanning resolution in the mid-range scanning pattern is higher and the details are better.

Then, the controller 40 controls the third set of projectors 23 to turn on to project parallel-line lasers onto the to-be-scanned object, and small-range scanning is performed on the to-be-scanned object; meanwhile, the controller 40 controls the second set of cameras 32 to collect the images of the parallel-line lasers projected onto the to-be-scanned object within the small range and reflected by the to-be-scanned object, so that fine scanning can be performed on high-detail areas of interest to obtain the high-detail point cloud, and the scanning resolution in the small-range scanning mode is high and the details are good.

So far, the combined multi-range multi-mode scanning of the to-be-scanned object can be completed in a large/medium/small range can be completed, the frame contour point cloud is scanned over a large range, the mid-range scanning is performed on areas with detail requirement but without precise requirement, the small range scanning is performed with high detail and precision on areas of interest, and the scanning process realizes automatic matching and switching between different ranges based on a same three-dimensional scanner.

It can be understood that after images of the to-be-scanned object in different scanning ranges are collected, the images of the to-be-scanned object collected in different scanning ranges can be further processed to obtain three-dimensional point cloud data in different scanning ranges.

It can also be understood that no matter which scanning range of large, medium or small is adopted on scanning of the to-be-scanned object, the image of the to-be-scanned object is always collected by using cameras with the corresponding focal length, and then the three-dimensional point cloud data is generated based on the image of the to-be-scanned object collected by the cameras, and the generated three-dimensional point cloud is still in the corresponding camera coordinate system, therefore, it is also necessary to match and splice the three-dimensional point cloud data of different scanning ranges into a global coordinate system to finally obtain the three-dimensional model reconstruction of the to-be-scanned object. In particular, the three-dimensional scanner provided by the embodiment of the present disclosure can scan the to-be-scanned object in a large range, a medium range, and a small range, so when the scanning range is being switched, it is more necessary to unify the obtained three-dimensional point cloud data into the global coordinate system to match the overall and locals of the to-be-scanned object.

Optionally, when the controller 40 is used to control the first set of projectors 21 to start large-scale scanning of the to-be-scanned object, the three-dimensional point cloud data obtained from the images collected by the first set of cameras 31 is matched and spliced into the global coordinate system by feature splicing or mark point splicing.

When the controller 40 is used to control the second set of projectors 22 to start medium-scale scanning of the to-be-scanned object, the three-dimensional point cloud data obtained from the images collected by the second set of cameras 32 is matched and spliced into the global coordinate system by mark point splicing.

When the controller 40 is used to control the third set of projectors 23 to start scanning of the to-be-scanned object, the three-dimensional point cloud data obtained from the images collected by the second set of cameras 32 is matched and spliced into the global coordinate system by mark point splicing.

It may be understood that both feature splicing and mark point splicing are pose positioning manners, and both match a current coordinate system to a global coordinate system by using a rotation matrix and a translation matrix. Feature splicing refers to that 3D point clouds reconstructed from front and back frames are matched and spliced into the global coordinate system through some identical features. For example, if the 3D scanner scans a face of a person for two times, the nose, eyes, and teeth may be used as features for splicing. The mark point splicing is to splice relative poses by adhering some mark points to the object to be scanned and recognizing the mark points, where the positions where the mark points are adhered on the object to be scanned may be determined according to scanning requirements.

It can also be understood that as the first set of projectors 21 corresponds to large-scale scanning, relative poses can be spliced based on some features of the object to be scanned under large-scale scanning, or the relative poses can be spliced by adhering some mark points. However, the mid-range scanning corresponding to the second set of projectors 22 and the small-range scanning corresponding to the third set of projectors 23 are more focused on local areas or detail areas of the object to be scanned, and there may not be any specific feature for splicing relative poses, so it is more suitable to adhere some mark points for pose splicing.

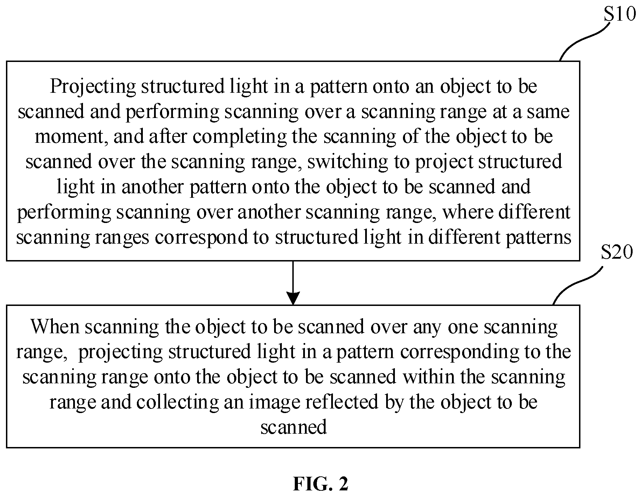

Correspondingly, an embodiment of the present disclosure further provides a scanning method of a three-dimensional scanner, which is applied to the three-dimensional scanner provided by any of the above embodiments. FIG. 2 shows a schematic flowchart of the scanning method of the three-dimensional scanner provided by an embodiment of the present application. As shown in FIG. 2, the scanning method of the three-dimensional scanner includes followings steps S10 and S20.

S10: projecting structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range, where different scanning ranges correspond to structured light in different patterns.

S20: when scanning the object to be scanned over any one scanning range, projecting structured light in a pattern corresponding to the scanning range onto the object to be scanned within the scanning range and collecting an image reflected by the object to be scanned.

In an embodiment of the present disclosure, different scanning ranges correspond to structured light in different patterns, that is, different scanning ranges adopt structured light in respective patterns applicable to the scanning ranges.

Referring to FIG. 1, it could be understood that when the object to be scanned is to be scanned, the three-dimensional scanner is disposed to face the object to be scanned, and a direction in which the three-dimensional scanner and the object to be scanned face each other is set as a first direction X. To scan an overall contour of the object to be scanned, a relatively large distance is required between the three-dimensional scanner and the object to be scanned, that is, the three-dimensional scanner has a relatively far scanning range along the first direction X. To perform local high-detail scanning on the object to be scanned, a relatively close distance is required between the three-dimensional scanner and the object to be scanned, that is, the three-dimensional scanner has a scanning range closer to the first direction X. In an embodiment of the present disclosure, the scanning range refers to a scanning range along the first direction X, and different scanning ranges specifically refer to different scanning ranges along the first direction X.

It can be further understood that the scanning ranges along the first direction X are different, that is, at least parts of the scanning ranges along the first direction X are non-overlapping.

It can be seen that the scanning method of the three-dimensional scanner provided by the embodiment of the present disclosure can realize the combination of the at least two patterns of structured light and the at least two scanning ranges, and complete the collaborative scanning of different scanning ranges with different detail requirements, specifically, it can be selected to project the structured light in the appropriate pattern to the to-be-scanned object to scan a large-range scene without requiring high details, and at the same time, it can be selected to project the structured light in the appropriate pattern to the to-be-scanned object to scan a local high-detail area, so as to meet the requirements of large-range scanning and local high-detail scanning of the to-be-scanned object, and the different scanning ranges can be automatically switched, which saves time and effort, reduces costs, and optimizes scanning efficiency.

Optionally, the step S10 of projecting structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range includes:
S11: projecting structured light in a first pattern onto the object to be scanned and performing scanning over a first scanning range, switching to project structured light in a second pattern onto the object to be scanned and performing scanning over a second scanning range, and switching to project structured light in a third pattern onto the object to be scanned and performing scanning over a third scanning range.

Optionally, the first scanning range, the second scanning range and the third scanning range are progressively closer to the three-dimensional scanner in sequence. That is, the first scanning range may be a large scanning range, the second scanning range may be a medium scanning range, and the third scanning range may be a small scanning range.

Correspondingly, the structured light in a first pattern may be speckles, the structured light in a second pattern may be cross-line lasers, and the structured light in a third pattern may be parallel-line lasers.

Specifically, when the object to be scanned is to be scanned, firstly speckles can be projected onto the to-be-scanned object, and large-scale scanning is performed on the to-be-scanned object; meanwhile, the images reflected by the to-be-scanned object when the speckles are projected to the to-be-scanned object within a large range can be collected, so that an overall frame contour point cloud of the to-be-scanned object can be acquired, but with low scanning resolution and poor details for a large scanning range.

Then, cross-line lasers can be projected onto the to-be-scanned object, and mid-range scanning is performed on the to-be-scanned object; meanwhile, images of the cross-line lasers projected onto the to-be-scanned object within the mid-range and reflected by the to-be-scanned object can be collected; in this way, the corners that are not scanned in the large-range scanning mode can be supplemented, the range with detail requirements can be further scanned, point clouds with better details can be obtained, and the scanning resolution in the mid-range scanning pattern is higher and the details are better.

Then, parallel-line lasers can be projected onto the to-be-scanned object, and small-range scanning is performed on the to-be-scanned object; meanwhile, the images of the parallel-line lasers projected onto the to-be-scanned object within the small range and reflected by the to-be-scanned object can be collected, so that fine scanning can be performed on high-detail areas of interest to obtain the high-detail point cloud, and the scanning resolution in the small-range scanning mode is high and the details are good.

So far, the combined multi-range multi-mode scanning of the to-be-scanned object can be completed in a large/medium/small range can be completed, the frame contour point cloud is scanned over a large range, the mid-range scanning is performed on areas with detail requirement but without precise requirement, the small range scanning is performed with high detail and precision on areas of interest, and the scanning process realizes automatic matching and switching between different ranges based on a same three-dimensional scanner.

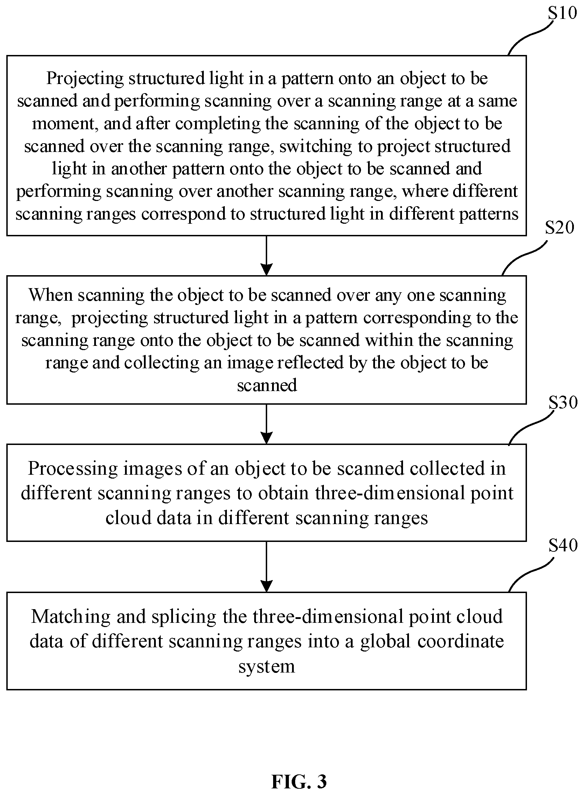

It can be understood that, after the images of the object to be scanned in different scanning ranges are acquired, the images of the object to be scanned in different scanning ranges may be further processed. Specifically, as shown in FIG. 3, the scanning method of the three-dimensional scanner may further include:
S30: processing images of an object to be scanned collected in different scanning ranges to obtain three-dimensional point cloud data in different scanning ranges; and
S40: matching and splicing the three-dimensional point cloud data of different scanning ranges into a global coordinate system.

It can be understood that no matter which scanning range of large, medium or small is adopted on scanning of the to-be-scanned object, the image of the to-be-scanned object is always collected by using cameras with the corresponding focal length, and then the three-dimensional point cloud data is generated based on the image of the to-be-scanned object collected by the cameras, and the generated three-dimensional point cloud is still in the corresponding camera coordinate system, therefore, it is also necessary to match and splice the three-dimensional point cloud data of different scanning ranges into a global coordinate system to finally obtain the three-dimensional model reconstruction of the to-be-scanned object. In particular, the three-dimensional scanner provided by the embodiment of the present disclosure can scan the to-be-scanned object in a large range, a medium range, and a small range, so when the scanning range is being switched, it is more necessary to unify the obtained three-dimensional point cloud data into the global coordinate system to match the overall and locals of the to-be-scanned object.

Optionally, some mark points may be pre-adhered on a specific position of the object to be scanned, so that the image of the object to be scanned collected in each scanning range includes the image of the mark points pre-adhered on the specific position of the object to be scanned, and the three-dimensional point cloud data in each scanning range includes the three-dimensional point cloud data of the mark points pre-adhered on the specific position of the object to be scanned. Thus the step S40 of matching and splicing the three-dimensional point cloud data of different scanning ranges into a global coordinate system includes:

matching and splicing the three-dimensional point cloud data of the different scanning ranges into the global coordinate system according to the three-dimensional point cloud data of the mark point pre-adhered to the specific position on the object to be scanned in the three-dimensional point cloud data of each of the scanning ranges.

Specifically, the three-dimensional point cloud data of the different scanning ranges may be matched and spliced into the global coordinate system according to the three-dimensional point cloud data of the mark point pre-adhered to the specific position on the object to be scanned in the three-dimensional point cloud data of each of the scanning ranges.

Alternatively, the step S40 of matching and splicing the three-dimensional point cloud data of the different scanning ranges into the global coordinate system includes:
matching and splicing the three-dimensional point cloud data of the different scanning ranges into the global coordinate system according to the three-dimensional point cloud data of a fixed feature on the object to be scanned in the three-dimensional point cloud data of each of the scanning ranges.

Specifically, the three-dimensional point cloud data of different scanning ranges may be matched and spliced into the global coordinate system based on the three-dimensional point cloud data of the fixed feature on the to-be-scanned object in the three-dimensional point cloud data of each scanning range.

It may be understood that both feature splicing and mark point splicing are pose positioning manners, and both match a current coordinate system to a global coordinate system by using a rotation matrix and a translation matrix. Feature splicing refers to that 3D point clouds reconstructed from front and back frames are matched and spliced into the global coordinate system through some identical features. For example, if the 3D scanner scans a face of a person for two times, the nose, eyes, and teeth may be used as features for splicing. The mark point splicing is to splice relative poses by adhering some mark points to the object to be scanned and recognizing the mark points, where the positions where the mark points are adhered on the object to be scanned may be determined according to scanning requirements.

It can also be understood that for a large scanning range, the relative pose can be spliced based on some features of the object to be scanned under a large scanning range, or the relative pose can be spliced by adhering some mark points. However, for a small or medium scanning range, it is more focused on a local area or a detail area of the object to be scanned, and there may not be any specific feature for splicing the relative pose, so it is more suitable to adhere some mark points for splicing the pose.

Various sections in this specification are described in a manner of parallel and progressive combination, each section focuses on the differences from other parts, and the same or similar parts among the various parts can be referred to each other.

For the above description of the disclosed embodiments, the features described in the embodiments of the present specification can be replaced or combined with each other to enable those skilled in the art to implement or use the present disclosure. Various modifications to these embodiments will be apparent to those skilled in the art, and the general principles defined herein may be implemented in other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A three-dimensional scanner, comprising:
a bracket (10);
at least two sets of projectors (20) and at least two sets of cameras (30) mounted on the bracket (10), wherein each set of projectors (20) comprises at least one projector, and each set of cameras (30) comprises at least two cameras; wherein the each set of projectors (20) corresponds to a respective scanning range, different sets of projectors (20) correspond to different scanning ranges; the each set of projectors (20) projects structured light onto an object to be scanned, and an image reflected by the object to be scanned is collected by one set of cameras (30) with a corresponding focal length; and
a controller (40), configured to, when the object to be scanned is to be scanned, control one set of projectors (20) to turn on at a same moment; and when any one set of projectors (20) is turned on, control one set of cameras (30) with a corresponding focal length to collect an image reflected by the object to be scanned.

2. The three-dimensional scanner according to claim 1, wherein different sets of projectors (20) are configured to project structured light in different patterns, and the each set of projectors (20) is configured to project structured light in a corresponding pattern onto an object to be scanned within a corresponding scanning range.

3. The three-dimensional scanner according to claim 1, wherein the controller (40) is further configured to: after scanning over a corresponding scanning range is completed, control another set of projectors (20) to turn on to perform scanning over another scanning range.

4. The three-dimensional scanner according to claim 1, wherein different sets of cameras (30) have different focal lengths.

5. The three-dimensional scanner according to any one of claims 1-4, wherein one set of projectors (20) corresponds to one set of cameras (30).

6. The three-dimensional scanner according to any one of claims 1-4, wherein two or more sets of projectors (20) correspond to one set of cameras (30).

7. The three-dimensional scanner according to claim 6, wherein
the at least two sets of projectors (20) comprise three sets of projectors (20), comprising a first set of projectors (21), a second set of projectors (22), and a third set of projectors (23), wherein scanning ranges corresponding to the first set of projectors (21), the second set of projectors (22), and the third set of projectors (23) are progressively closer to the bracket (10) in sequence;
the at least two sets of cameras (30) comprise two sets of cameras (30), comprising a first set of cameras (31) and a second set of cameras (32), wherein the first set of cameras (31) and the second set of cameras (32) each comprises two cameras, and a focal length of the first set of cameras (31) is less than a focal length of the second set of cameras (32); on either side of the three sets of projectors (20), a camera in the first set of cameras (31) is located on a side of a camera in the second set of cameras (32) facing away from the three sets of projectors (20);
when controlling the first set of projectors (21) to turn on to scan the object to be scanned, the controller (40) is configured to control the first set of cameras (31) to collect an image reflected by the object to be scanned;
when controlling the second set of projectors (22) to turn on to scan the object to be scanned, the controller (40) is configured to control the second set of cameras (32) to collect an image reflected by the object to be scanned;
when controlling the third set of projectors (23) to turn on to scan the object to be scanned, the controller (40) is configured to control the second set of cameras (32) to collect an image reflected by the object to be scanned.

8. The three-dimensional scanner according to claim 7, wherein the first set of projectors (21) projects structured light in a speckle pattern, the second set of projectors (22) projects structured light in a cross-line laser pattern, and the third set of projectors (23) projects structured light in a parallel-line laser pattern.

9. The three-dimensional scanner according to claim 8, wherein the structured light in the speckle pattern comprises a series of randomly distributed light points.

10. The three-dimensional scanner according to claim 8, wherein the structured light in the cross-line laser pattern comprises multiple laser lines intersecting with each other in space.

11. The three-dimensional scanner according to claim 8, wherein the structured light in the parallel-line laser pattern comprises laser beams completely parallel along a propagation direction.

12. A scanning method of a three-dimensional scanner, comprising:
projecting (S10) structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range, wherein different scanning ranges correspond to structured light in different patterns;
when scanning the object to be scanned over any one scanning range, projecting (S20) structured light in a pattern corresponding to the scanning range onto the object to be scanned within the scanning range and collecting an image reflected by the object to be scanned.

13. The scanning method of the three-dimensional scanner according to claim 12, wherein projecting (S10) structured light in a pattern onto an object to be scanned and performing scanning over a scanning range at a same moment, and after completing the scanning of the object to be scanned over the scanning range, switching to project structured light in another pattern onto the object to be scanned and performing scanning over another scanning range comprises:
projecting structured light in a first pattern onto the object to be scanned and performing scanning over a first scanning range, switching to project structured light in a second pattern onto the object to be scanned and performing scanning over a second scanning range, and switching to project structured light in a third pattern onto the object to be scanned and performing scanning over a third scanning range, wherein the first scanning range, the second scanning range and the third scanning range are progressively closer to the three-dimensional scanner in sequence.

14. The scanning method of the three-dimensional scanner according to claim 12, further comprising:
processing (S30) images collected in different scanning ranges to obtain three-dimensional point cloud data in different scanning ranges; and
matching and splicing (S40) the three-dimensional point cloud data of different scanning ranges into a global coordinate system.

15. The scanning method of the three-dimensional scanner according to claim 14, wherein an image collected in each of the scanning ranges comprises an image of a mark point pre-adhered at a specific position on the object to be scanned, and the three-dimensional point cloud data of each of the scanning ranges comprises three-dimensional point cloud data of the mark point on the object to be scanned;
wherein matching and splicing the three-dimensional point cloud data of different scanning ranges into a global coordinate system comprises:
matching and splicing the three-dimensional point cloud data of the different scanning ranges into the global coordinate system according to the three-dimensional point cloud data of the mark point on the object to be scanned in the three-dimensional point cloud data of each of the scanning ranges.
